# EUROPÄISCHE PATENTSCHRIFT

(11) **EP 0 343 511 B1**
(45) Veröffentlichungstag und Bekanntmachung des Hinweises auf die Patenterteilung: **16.03.1994**
(21) Anmeldenummer: 89108954.2
(22) Anmeldetag: 18.05.1989
(51) Int. Cl.: B29C 67/14, B29C 43/20, B29C 43/14

(54) **Verfahren zur Herstellung eines schalenartigen Formteiles**
Method for producing shell-like moulded articles
Procédé pour la fabrication de pièces moulées en forme de coquille

(30) Priorität: 24.05.1988 DE 3817525
(43) Veröffentlichungstag der Anmeldung: 29.11.1989
(73) Patentinhaber: Weigel, Claus, D-57629 Atzelgift (DE); Weigel, Angela, D-57629 Atzelgift (DE); Weigel, Susanne, D-57629 Atzelgift (DE)
(72) Erfinder: Weigel, Jürgen, D-5239 Atzelgift (DE)
(74) Vertreter: Kossobutzki, Walter, Dipl.-Ing.(FH)

(56) Entgegenhaltungen:
- EP-A- 0 229 441
- DE-A- 2 442 227
- DE-A- 2 844 612
- GB-A- 1 282 306
- US-A- 3 150 792
- US-A- 3 184 527
- US-A- 3 597 425
- US-A- 4 076 788

## Beschreibung

Die Erfindung bezieht sich auf ein verfahren zur Herstellung eines schalenartigen Formteiles, dessen Wandung aus einer faserverstärkten Tragschicht aus einem flüssigen Kunstharz mit Härter und zumindest einer auf einer Seite der Tragschicht angeordneten und einstückig mit derselben verbundenen Deckschicht aus einem modifizierten, flüssigen Kunstharz besteht, wobei zur Herstellung der Deckschicht zwischen einer positiven und/oder negativen Form und der Tragschicht ein verformbarer Raum gebildet und in den Raum eine vorgegebene Menge des für die Deckschicht erforderlichen, flüssigen Kunstharzes eingefüllt wird.

Es ist bekannt, schalenartige Formteile aus faser-, insbesondere glasfaserverstärktem Kunststoff durch ein sogenanntes Handlaminatverfahren herzustellen. Dabei wird mit einer einschaligen, positiven oder negativen Form, insbesondere aus Holz, gearbeitet, deren Oberfläche sehr glatt ausgebildet sein muß. Auf diese sehr glatte Oberfläche wird zunächst ein Trennmittel aus Wachs oder Silikonöl oder eine besondere Trennfolie aufgebracht. Anschließend wird auf dieser Trennschicht die eigentliche Deckschicht, die auch als Feinschicht oder Gelcoat bezeichnet wird, aufgebracht. Diese Deckschicht wird dadurch erzeugt, daß ein modifiziertes, flüssiges Kunstharz in einer vorgegebenen, möglichst gleichmäßigen Schichtdicke auf die Trennschicht aufgespritzt oder auch aufgestrichen wird. Die der Trennschicht zugewandte Fläche der Deckschicht bildet dabei normalerweise die Außen- bzw. Sichtseite des Formteiles.

Nach der Aushärtung dieser Deckschicht wird auf derselben die eigentliche Tragschicht erzeugt, indem auf dieselbe eine oder mehrere mit einem aushärtbaren Kunststoff getränkte Fasermatten, beispielsweise Glasfaser- oder Kohlenstoffasermatten, aufgelegt und bedarfsweise noch zusätzlich mit dem härtbaren Kunststoff gestrichen bzw. eingetränkt werden. Nach der Aushärtung des laminierten bzw. faserverstärkten Kunststoffes ist das schalenartige Formteil, dessen Kanten noch bearbeitet werden müssen, fertig. Ein derartiges Handlaminatverfahren wird insbesondere für Kleinserien und Sonderkonstruktionen angewendet. Neben dem hohen Arbeitsaufwand besteht hier ein großer Nachteil darin, daß sowohl durch das Trennmittel, insbesondere aber durch den hohen Anteil von Styrol in dem Kunststoff der Deckschicht hohe Emissionen auftreten, die nur schlecht absaugbar sind und einen zusätzlichen Reinigungsaufwand erfordern. Insbesondere ist es mit diesem Verfahren nicht möglich, eine Deckschicht nachträglich auf einer Tragschicht aufzubringen. Dies führt dazu, daß dann, wenn ein Kunde gleiche Formteile mit unterschiedlichen, insbesondere unterschiedlich gefärbten, Deckschichten verlangt, eine Vielzahl von Formteilen mit unterschiedlichen Deckschichten auf Lager gehalten werden muß, was zusätzliche Kosten mit sich bringt. Die Wandstärke der Deckschicht ist sehr ungleich, so daß hier mehr Deckschichtmaterial als erforderlich benötigt wird.

Aus der DE-OS 24 42 227 ist ein Verfahren zur Aufbringung einer Deckschicht aus einem modifizierten, flüssigen Kunstharz auf eine faserverstärkte Tragschicht aus einem flüssigen Kunstharz mit Härter bekannt, bei dem ein vorgefertigtes, zunächst nur aus der Tragschicht bestehendes Formteil in eine Form eingelegt wird. Sodann wird dann auf die Tragschicht des Formteiles das für die Bildung der Deckschicht erforderliche Kunstharz aufgegeben und die Form geschlossen. Nun wird ein ausreichender Druck auf das eingefüllte Kunstharz ausgeübt, das sich dadurch über die Oberfläche des Formteiles zunächst verteilt und anschließend aushärtet. Bei diesem Verfahren ist das Auftreten von Emissionen weitgehend ausgeschlossen. Das Aufbringen der Deckschicht setzt jedoch immer eine geschlossene, zweiteilige Form voraus, die mit verhältnismäßig hohen Investitionskosten verbunden ist. Für Formteile, die nur einmal oder in einer äußerst geringen stückzahl herzustellen sind, ist ein solches Verfahren wirtschaftlich nicht vertretbar. Dabei ist auch zu berücksichtigen, daß für die Aufbringung des Druckes, der für eine Verteilung des Kunstharzes zur Bildung der Deckschicht erforderlich ist, eine besondere Preßvorrichtung benötigt wird, die sich hinsichtlich ihrer Kosten ebenfalls nachteilig auf die Kosten der Formteile auswirkt. Mit dem vorbekannten Verfahren ist es grundsätzlich nicht möglich, zunächst nur die Deckschicht zu erzeugen und anschließend auf der Deckschicht die Tragschicht herzustellen.

Dr Erfindung liegt deshalb die Aufgabe zugrunde, ein Verfahren zur Herstellung eines schalenartigen Formteiles gemäß dem Oberbegriff des Anspruches 1 anzugeben, bei dem bei einer Reduzierung der Styrolemissionen der Aufwand für die Formen verhältnismäßig gering gehalten werden kann und eine besondere Presse nicht erforderlich ist.

Daneben soll aber auch die Möglichkeit bestehen, auf eine bereits gefertigte Tragschicht eines Formteiles eine Deck- bzw. Feinschicht aufzubringen und somit einen besonderen Oberflächenbehandlungsvorgang, insbesondere Lackiervorgang, zu vermeiden.

Zur Lösung dieser Aufgabe wird bei einem Verfahren der eingangs beschriebenen Gattung vorgeschlagen, daß der das Kunstharz für die Deckschicht aufnehmende Raum durch Vakuum verformt wird.

Durch den verformbaren, zumindest weitgehend geschlossenen Raum treten während der Bildung der Deckschicht keine Emissionen aus. Die Deckschicht wird in verhältnismäßig kurzer Zeit und mit annähernd gleicher Wandstärke hergestellt. Eine aufwendige Form und eine Preßvorrichtung sind für dieses Verfahren nicht notwendig. Die benötigte Vakuumeinrichtung ist verhältnismäßig preiswert. Durch dieses Verfahren ist es möglich, entweder die Deckschicht zuerst herzustellen und dann auf der Deckschicht die Tragschicht herzustellen oder die Deckschicht auf der bereits fertigen Tragschicht bzw. einem sogenannten Rohbauteil herzustellen.

Weitere Merkmale des Verfahrens gemäß der Erfindung sind in den Ansprüchen 2 - 12 offenbart.

Die Erfindung wird nachfolgend anhand in einer Zeichnung in vereinfachter, nicht maßstabsgetreu dargestellter Ausführungsbeispiele näher erläutert. Dabei zeigen
- Fig. 1: eine Vorrichtung zur Herstellung einer Deckschicht nach dem erfindungsgemäßen Verfahren,
- Fig. 2: die Vorrichtung der Fig. 1 mit fertiger Deckschicht,
- Fig. 3: eine weitere Vorrichtung zur Herstellung einer Deckschicht nach dem Verfahren gemäß der Erfindung mit einer Folie,
- Fig. 4: die Vorrichtung der Fig. 3 mit fertiger Deckschicht,
- Fig. 5: eine weitere Ausbildung einer Vorrichtung zur Herstellung einer Deckschicht mit einer Folie,
- Fig. 6: die Vorrichtung nach der Fig. 5 mit einer zusätzlichen Trennfolie,
- Fig. 7: eine Vorrichtung zur Herstellung eines schalenartigen Formteiles in ihrer Ausgangsstellung, mit zwei Folien und einem Rohbauteil,
- Fig. 8: die Vorrichtung der Fig. 7 in einer Zwischenstellung,
- Fig. 9: eine weitere Vorrichtung zur Ausbildung einer Deckschicht,
- Fig. 10: eine Vorrichtung zur Bildung einer Deckschicht auf einer bereits vorgefertigten Tragschicht,
- Fig. 11: eine weitere Ausbildung einer Vorrichtung zur Bildung einer Deckschicht auf einer vorgefertigten Tragschicht in Kombination mit einer Zwischeneinlage und
- Fig. 12: eine andere Ausgestaltung einer Vorrichtung zur Bildung einer Deckschicht mit zwei Folien.

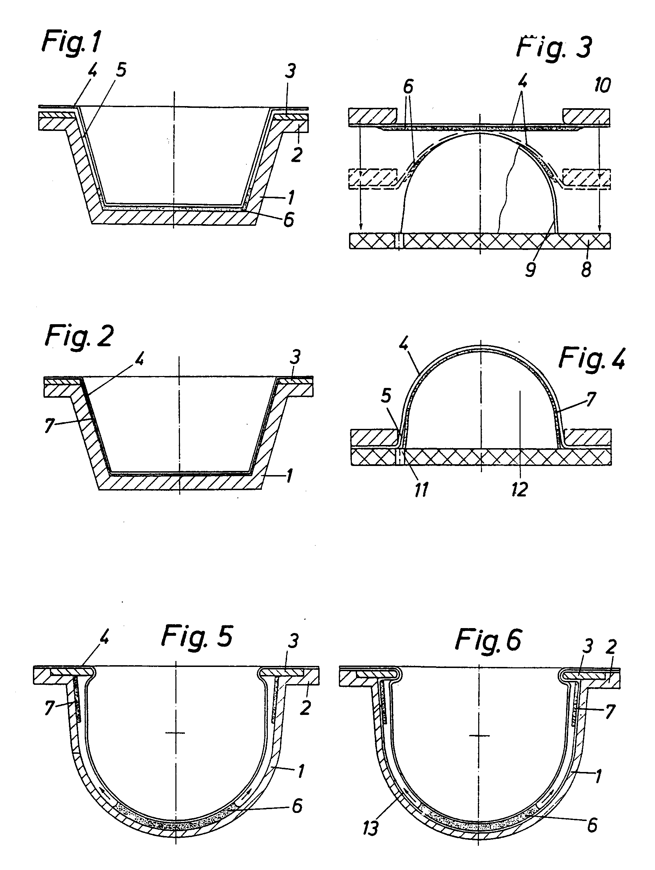

In den Figuren 1 und 2 der Zeichnung ist eine Form 1 mit trapezförmigen Querschnitt gezeigt, die beispielsweise aus Holz gefertigt ist und die in ihrem oberen Bereich einen Flansch 2 zur Aufnahme eines Zwischenteiles 3 besitzt. Der Innenraum der Form 1 ist mit einer nicht dargestellten Trennschicht versehen, die beispielsweise aus Wachs oder aus Silikonöl gebildet ist. Im Bereich des Flansches 2 oder des Zwischenteiles 3 sind in der Zeichnung nicht dargestellte Kanäle vorgesehen, an die mindestens eine an sich bekannte Vakuumpumpe anschließbar ist.

Nach dem Eintrennen der Form 1 wird auf den Formboden eine vorgegebene Menge eines modifizierten, flüssigen Kunststoffes 6 aufgegeben (Fig. 1), die zur Bildung einer den Innenraum der Form 1 abdeckenden Deckschicht 7 erforderlich ist. Nach dem vollständigen Abdichten mit einer vorgeformten Folie 4 oder einem besonderen Rohbauteil wird ein dabei gebildeter Zwischenraum 5 in verhältnismäßig kurzer Zeit evakuiert. Dabei legt sich die vorgeformte Folie 4 zunächst nach innen in Richtung auf den Boden der Form 1, wo sie auf dem flüssigen Kunststoff 6 zum Anliegen kommt. Bei einer weiteren Evakuierung des Zwischenraumes 5 wird der flüssige Kunststoff 6 mit annähernd gleichmäßiger Wandstärke durch die vorgeformte Folie 4 über die Innenfläche der Form 1 verteilt, bis sich die geschlossene Deckschicht 7 gemäß Fig. 2 gebildet hat. Dabei hat sich der Zwischenraum 5 so verformt bzw. verkleinert, daß er genau in seinem Volumen dem Volumen des flüssigen Kunststoffes 6 entspricht. Am Ende der Evakuierung ist der Zwischenraum 5 vollständig mit dem flüssigen Kunststoff 6 bzw. der Deckschicht 7 ausgefüllt. Dabei ist durch die vorgeformte Folie 4 oder das Rohbauteil sichergestellt, daß während der Bildung der Deckschicht 7 keine unkontrollierbaren Emissionen nach außen gelangen.

Sobald die Deckschicht 7 aufgrund eines im flüssigen Kunststoff 6 befindlichen Härters eine vorbestimmte Aushärtung erreicht hat, wird die dünne, vorgeformte Folie 4, die ausschließlich der Bildung der Deckschicht 7 dient, entfernt. Anschließend wird auf die Deckschicht 7 in an sich bekannter Weise eine nicht dargestellte Tragschicht aus faserverstärktem Kunststoff erzeugt. Diese Tragschicht kann in der Weise hergestellt werden, daß zunächst die Innenwandung der Form 1 bzw. die Deckschicht 7 mit Fasermatten belegt wird. Sodann wird die Form 1, nachdem die für die Tragschicht erforderliche, flüssige Kunststoffmenge in die Form 1 eingefüllt wurde, erneut durch eine Folie verschlossen. Durch Evakuierung des Raumes 5 zwischen der Folie, die ähnlich der Folie 4 ausgebildet ist, und der Deckschicht 7 wird auch diese Folie nach innen gezogen. Dabei verteilt sich die eingefüllte Kunstharzmasse gleichmäßig über die Deckschicht 7, die Fasermatten werden von der Kunstharzmasse durchtränkt und die Tragschicht ist gebildet.

Bei dem Ausführungsbeispiel nach den Figuren 3 und 4 besteht die Vorrichtung zur Bildung einer Deckschicht 7 aus einer Grundplatte 8, auf der entweder eine Form oder ein sogenanntes Rohbauteil 9 angeordnet ist. Dieses Rohbauteil 9 wird durch die faserverstärkte Tragschicht eines Formteiles gebildet, die an ihrer Außenfläche mit einer Deckschicht 7 zu versehen ist. Zur Erzeugung der Deckschicht 7 ist über der Grundplatte 8 ein Flansch 10 vorgesehen, der mit einer verformbaren bzw. tiefziehbaren Folie 4 bedeckt ist. Auf der der Grundplatte 8 zugewandten Fläche der Folie 4 ist eine Schicht aus flüssigem Kunststoff 6 aufgebracht, die zur Bildung der Deckschicht 7 dient. Bedarfsweise kann dieser Kunststoff 6 auch im Bereich der oberen Fläche des Rohbauteiles 9 aufgebracht werden.

Bei der Bewegung des Flansches 10 in Richtung auf die Grundplatte 8 wird die Folie 4 verformt und dabei auf dem Rohbauteil 9 die Deckschicht 7 ausgebildet (Fig. 4). Bedarfsweise können in der Grundplatte 8 Bohrungen 11 angeordnet sein, über die der Raum 5 zwischen dem Rohbauteil 9 und der Folie 4 evakuiert wird, wodurch sich die Gleichmäßigkeit der Wandstärke der Deckschicht 7 verbessert. Bedarfsweise ist es möglich, den Flansch 10 über ein verformbares Schlauchstück mit der Grundplatte 8 zu verbinden und den gesamten Raum 5 zwischen der Grundplatte 8 und dem Flansch 10 mit der Folie 4 zu evakuieren. Ein besonderer Antrieb für den Flansch 10 kann dann entfallen. Das fertige Formteil 12 (Fig. 4) besitzt eine nachträglich aufgebrachte Deckschicht 7, die durch die Folie 4 eine sehr glatte und einwandfreie Oberfläche aufweist, die normalerweise nicht mehr nachbearbeitet werden muß.

Bei dem Ausführungsbeispiel der Fig. 5 ist in die Form 1 im Bereich des Flansches 2 ein Zwischenteil 3 eingelegt, welches um einen vorbestimmten Betrag in die freie Fläche der Form 1 ragt. Auch hier wird in die mit einem Trennmittel beschichtete Form 1 ein flüssiger Kunststoff 6 eingefüllt, welcher durch eine auf dem Zwischenteil 3 aufgelegte Folie 4 und Vakuum sich gleichmäßig über die Innenfläche der Form 1 verteilt und somit die nur angedeutete Deckschicht 7 bildet. Nach der Aushärtung der Deckschicht 7 wird die Folie 4 entfernt. Anschließend wird auf die Deckschicht 7 in an sich bekannter Weise die faserverstärkte Tragschicht erzeugt. Bedarfsweise kann sich diese Tragschicht über das Zwischenteil 3 erstrecken.

Das Ausführungsbeispiel der Figur 6 stimmt im wesentlichen mit dem Ausführungsbeispiel der Figur 1 überein. Hier besitzt die Form 1 jedoch eine zusätzliche Trennschicht 13, die aus einer Kunststoffolie gebildet ist. Diese Kunststoffolie wurde auf dem Flansch 2 bzw. dem Zwischenteil 3 dichtend befestigt und anschließend durch Evakuierung an der Innenwandung der Form 1 und dem Zwischenteil 3 zum Anliegen gebracht. Anschließend wird auf dieser Trennschicht 13 die Deckschicht 7, wie anhand der Fig. 5 erläutert, erzeugt.

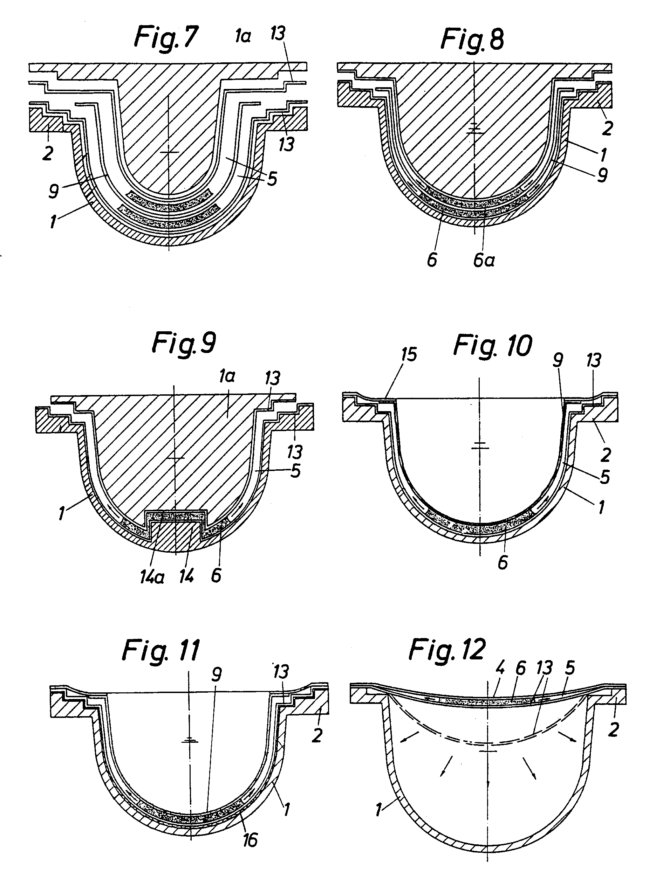

Bei dem Ausführungsbeispiel nach den Figuren 7 und 8 ist der Form 1 ein Gegenstück 1a zugeordnet. Hier ist sowohl das Innere der Form 1 als auch das Äußere des Gegenstückes 1a jeweils mit einer Trennschicht 13 versehen, die aus einer tiefziehbaren Kunststoffolie besteht. Über Vakuum werden diese Trennschichten 13 sowohl an der Form 1 als auch am Gegenstück 1a zum Anliegen gebracht (Fig. 8). Gemäß diesem Ausführungsbeispiel wird hier ein Rohbauteil 9 sowohl an seiner Innenfläche als auch an seiner Außenfläche mit einer Deckschicht 7 versehen. Dazu wird zunächst in die Form 1 ein flüssiger Kunststoff 6 für die äußere Deckschicht 7 eingefüllt. Sodann wird das Rohbauteil 9, in dem sich bereits ein flüssiger Kunststoff 6a zur Bildung der inneren Deckschicht 7 befindet, in die Form 1 eingesetzt. Nun wird das Gegenstück 1a in die Form 1 gedrückt, wobei sich die Deckschichten 7 aus den Kunststoffen 6 und 6a ausbilden und das Rohbauteil 9 vollständig umschließen. Bedarfsweise ist es möglich, daß Gegenstück 1a luftdicht mit der Form 1 zu verbinden und den zwischen Form 1 und Gegenstück 1a vorhandenen Raum 5 zu evakuieren. Auch hier bildet sich durch die flüssigen Kunststoffe 6 und 6a auf der Außenfläche und der Innenfläche des Rohbauteiles 9 eine einwandfreie Deckschicht 7 aus, die nicht mehr bearbeitet werden muß.

Auch bei dem Ausführungsbeispiel der Fig. 9 ist der Form 1 ein Gegenstück 1a zugeordnet. Hier sind ebenfalls die einander zugewandten Flächen der Form 1 und des Gegenstückes 1a mit einer Trennschicht 13 aus einer tiefziehbaren Folie versehen. In die Form 1 ist ein Vorsprung 14 eingearbeitet, während das Gegenstück 1a eine entsprechende Vertiefung 14a besitzt. Sowohl der Vorsprung 14 als auch die Vertiefung 14a sind von der Trennschicht 13 bzw. der Kunststoffolie bedeckt. Auch hier wird in die mit der Trennschicht 13 versehene Form 1 ein flüssiger Kunststoff 6 eingefüllt, welcher zur Bildung einer Deckschicht 7 dient. Dazu wird entweder das Gegenstück 1a in die Form 1 gedrückt oder der Raum 5 zwischen der Form 1 und dem Gegenstück 1a wird evakuiert. Dabei ist es erforderlich, daß die äußeren Ränder der Form 1 und des Gegenstückes 1a luftdicht miteinander verbunden sind. Bedarfsweise können zur Herstellung der Deckschicht 7 auch Druck und Vakuum gleichzeitig angewendet werden.

Bei dem Ausführungsbeispiel der Fig. 10 ist die Form 1 ebenfalls mit einer Trennschicht 13 aus einer tiefgezogenen Folie beschichtet. Nachdem hier ein flüssiger Kunststoff 6 zur Bildung einer Deckschicht 7 in die Form 1 eingefüllt wurde, wird in dieselbe eine Rohbauteil 9 eingesetzt, welches in seinem oberen Bereich beispielsweise über eine Folie 15 dichtend mit dem Flansch 2 der Form 1 verbunden wird. Über nicht dargestellte Bohrungen bzw. Kanäle wird nun die Luft aus dem zwischen dem Rohbauteil 9 und der Form 1 bzw. Trennschicht 13 gebildeten Raum 5 abgesaugt. Dabei wird das Rohbauteil 9 gegen die Form 1 gezogen und auf der Außenfläche des Rohbauteiles 9 bildet sich eine Deckschicht 7 aus. Das Rohbauteil 9 besteht auch hier aus einer nicht armierten (z.B. Polyesterbeton) oder faserverstärkten Tragschicht.

Das Ausführungsbeispiel der Figur 11 stimmt weitgehend mit dem Ausführungsbeispiel der Figur 10 überein. Hier ist jedoch die Trennschicht 13 nicht direkt auf der Innenfläche der Form 1 angebracht. Zwischen der Form 1 und der Trennschicht 13 befindet sich hier eine elastische Schicht 16, beispielsweise aus Schaumgummi, die bei der Herstellung des Rohbauteiles 9 einen Zwischenraum für die später in derselben Arbeitsform aufzubringende Feinschicht gewährleistet.

Beim Ausführungsbeispiel der Figur 12 werden auf dem Flansch 2 der Form 1 eine Trennschicht 13 und eine Folie 4 dichtend aufgebracht, wobei in den Raum 5 zwischen der Trennschicht 13 und der Folie 4 ein flüssiger Kunststoff 6 zur Bildung einer Deckschicht 7 eingefüllt ist und mittels Vakuum evakuiert wird. Über ein zweites Vakuum wird nun die Trennschicht 13 an der Innenwand der Form 1 zum Anliegen gebracht. Dabei verformt sich auch die Folie 4 in ähnlicher Weise, wobei sich zwischen der Trennschicht 13 und der Folie 4 eine Deckschicht ausbildet. Sobald diese Deckschicht ausgehärtet ist, wird die Folie 4 entfernt und auf die Deckschicht wird, wie anhand der Figuren 1 und 2 erläutert, die faserverstärkte Tragschicht aufgebracht.

## Patentansprüche

1. Verfahren zur Herstellung eines schalenartigen Formteiles, dessen Wandung aus einer faserverstärkten Tragschicht aus einem flüssigen Kunstharz mit Härter und zumindest einer auf einer Seite der Tragschicht angeordneten und einstückig mit derselben verbundenen Deckschicht (7) aus einem modifizierten, flüssigen Kunstharz besteht, wobei zur Herstellung der Deckschicht (7) zwischen einer positiven und/oder negativen Form (1) und der Tragschicht ein verformbarer Raum (5) gebildet und in den Raum (5) eine vorgegebene Menge des für die Deckschicht (7) erforderlichen, flüssigen Kunstharzes (6) eingefüllt wird,
dadurch gekennzeichnet,
daß der das Kunstharz (6) für die Deckschicht (7) aufnehmende Raum (5) durch Vakuum verformt wird.

2. Verfahren nach Anspruch 1,
dadurch gekennzeichnet,
daß die Deckschicht (7) auf der Oberfläche der Form (1) gebildet wird.

3. Verfahren nach Anspruch 2,
dadurch gekennzeichnet,
daß die Tragschicht auf der bereits fertigen Deckschicht (7) gebildet wird.

4. Verfahren nach Anspruch 1,
dadurch gekennzeichnet,
daß die Deckschicht (7) auf der Oberfläche der Tragschicht gebildet wird.

5. Verfahren nach Anspruch 3 oder 4,
dadurch gekennzeichnet,
daß die Tragschicht als Rohbauteil (9) vorgefertigt ist.

6. Verfahren nach mindestens einem der Ansprüche 1 - 5,
dadurch gekennzeichnet,
daß der verformbare Raum (5) von einem positiven und einem negativen Teil der Form (1) begrenzt wird.

7. Verfahren nach mindestens einem der Ansprüche 1 - 5,
dadurch gekennzeichnet,
daß der verformbare Raum (5) von der Form (1) und der Tragschicht begrenzt wird.

8. Verfahren nach mindestens einem der Ansprüche 1 - 5,
dadurch gekennzeichnet,
daß der verformbare Raum (5) von der Form (1) und einer elastisch verformbaren und wieder entfernbaren Zwischenschicht (4) begrenzt wird.

9. Verfahren nach mindestens einem der Ansprüche 1 - 5,
dadurch gekennzeichnet,
daß der verformbare Raum (5) von der Tragschicht und einer elastisch verformbaren und wieder entfernbaren Zwischenschicht (4) begrenzt wird.

10. Verfahren nach mindestens einem der Ansprüche 1 - 5,
dadurch gekennzeichnet,
daß der verformbare Raum (5) von zwei elastisch verformbaren und wieder entfernbaren Zwischenschichten (4,13) begrenzt wird.

11. Verfahren nach einem der Ansprüche 8 - 10,
dadurch gekennzeichnet,
daß die elastisch verformbare Zwischenschicht (4,13) aus einer Kunststoffolie gebildet wird.

12. Verfahren nach Anspruch 10,
dadurch gekennzeichnet,
daß sich die elastisch verformbare Zwischenschicht (4,13) auf der Oberfläche der Form (1,1a) abstützt.

## Claims

1. A process for the production of a shell-like moulding whose wall comprises a fibre-reinforced carrier layer of a liquid synthetic resin with hardener and at least one cover layer (7) of a modified liquid synthetic resin which is arranged on one side of the carrier layer and which is integrally connected thereto, wherein to produce the cover layer (7) a deformable space (5) is formed between a positive and/or negative mould (1) and the carrier layer and a predetermined count of the liquid synthetic resin (6) required for the cover layer (7) is introduced into the space (5), characterised in that the space (5) for receiving the synthetic resin (6) for the cover layer (7) is deformed by vacuum.

2. A process according to claim 1 characterised in that the cover layer (7) is formed on the surface of the mould (1).

3. A process according to claim 2 characterised in that the carrier layer is formed on the cover layer (7) when already finished.

4. A process according to claim 1 characterised in that the cover layer (7) is formed on the surface of the carrier layer.

5. A process according to claim 3 or claim 4 characterised in that the carrier layer is prefabricated in the form of a blank component (9).

6. A process according to at least one of claims 1 to 5 characterised in that the deformable space (5) is delimited by a positive and a negative part of the mould (1).

7. A process according to at least one of claims 1 to 5 characterised in that the deformable space (5) is delimited by the mould (1) and the carrier layer.

8. A process according to at least one of claims 1 to 5 characterised In that the deformable space (5) is delimited by the mould (1) and an elastically deformable intermediate layer (4) which can be removed again.

9. A process according to at least one of claims 1 to 5 characterised in that the deformable space (5) is delimited by the carrier layer and an elastically deformable intermediate layer (4) which can be removed again.

10. A process according to at least one of claims 1 to 5 characterised in that the deformable space (5) is delimited by two elastically deformable intermediate layers (4, 13) which can be removed again.

11. A process according to one of claims 8 to 10 characterised in that the elastically deformable intermediate layer (4, 13) is formed from a plastics foil.

12. A process according to claim 10 characterised in that the elastically deformable intermediate layer (4, 13) bears against the surface of the mould (1, 1a).

## Revendications

1. Procédé de fabrication d'une pièce de forme analogue à une coquille, dont la paroi se compose d'une couche support, renforcée par fibres et formée à partir d'une résine synthétique fluide contenant un durcisseur, et d'au moins une couche de recouvrement (7) formée d'une résine synthétique fluide modifiée, disposée d'un côté de la couche support et reliée unitairement avec elle, procédé dans lequel pour la réalisation de la couche de recouvrement (7), un volume déformable (5) est créé entre un moule (1) positif et/ou un moule (1) négatif et la couche support et dans ce volume (5) est introduite une quantité prédéterminée de la résine synthétique fluide (6) nécessaire pour la couche de recouvrement (7), caractérisé en ce que le volume (5) recevant la résine synthétique (6) pour la couche de recouvrement (7) sera déformé par vide.

2. Procédé selon la revendication 1, caractérisé en ce que la couche de recouvrement (7) est formée sur la surface du moule (1).

3. Procédé selon la revendication 2, caractérisé en ce que la couche support est formée sur la couche de recouvrement (7) déjà terminée de formation.

4. Procédé selon la revendication 1, caractérisé en ce que la couche de recouvrement (7) est formée sur la surface de la couche support.

5. Procédé selon la revendication 3 ou 4, caractérisé en ce que la couche support est préfabriquée comme une préforme (9).

6. Procédé selon au moins une des revendications 1 à 5, caractérisé en ce que le volume déformable (5) est délimité par une partie positive et une partie négative du moule (1).

7. Procédé selon au moins une des revendications 1 à 5, caractérisé en ce que le volume déformable (5) est délimité par le moule (1) et la couche support.

8. Procédé selon au moins une des revendications 1 à 5, caractérisé en ce que le volume déformable (5) est délimité par le moule (1) et par une couche intermédiaire (4) élastiquement déformable et pouvant être ensuite enlevée.

9. Procédé selon au moins une des revendications 1 à 5, caractérisé en ce que le volume déformable (5) est délimité par la couche support et par une couche intermédiaire (4) élastiquement déformable et pouvant être ensuite enlevée.

10. Procédé selon au moins une des revendications 1 à 5, caractérisé en ce que le volume déformable (5) est délimité par deux couches intermédiaires (4, 13) élastiquement déformables et pouvant être ensuite enlevées.

11. Procédé selon une des revendications 8 à 10, caractérise en ce que la couche intermédiaire (4, 13) élastiquement déformable est formée à partir d'une feuille de matière plastique.

12. Procédé selon la revendication 10, caractérisé en ce que la couche intermédiaire (4, 13) élastiquement déformable s'appuie contre la surface du moule (1, 1a).
